# EUROPEAN PATENT SPECIFICATION

(11) **EP 1 148 784 B1**
(45) Date of publication and mention of the grant of the patent: **23.02.2005**
(21) Application number: 00907543.3
(22) Date of filing: 01.02.2000
(51) Int. Cl.: A01N 43/80, A01N 25/26, A01N 25/28

(54) **WEED CONTROL**
UNKRAUTBEKÄMPFUNG
LUTTE CONTRE LES MAUVAISES HERBES

(30) Priority: 01.02.1999 GB 9902232; 12.04.1999 GB 9908313
(43) Date of publication of application: 31.10.2001
(73) Proprietor: Bayer Agriculture Limited, Hauxton, Cambridge CB2 5HU (GB)
(72) Inventor: ROBERTS, David Alan, Ongar, Essex CM5 0HW (GB); ZERROUK, Robert, F-43220 Dunières (FR); COLEGATE, Rachel, Ongar, Essex CM5 0HW (GB)
(74) Representative: Schwenk, Norbert, Dr.
(86) International application number: PCT/EP2000/001102
(87) International publication number: WO 2000/045637

(56) References cited:
- EP-A- 0 527 036
- WO-A-97/43270
- B. M. LUSCOMBE & K. E. PALLETT: "Isoxaflutole for weed control in maize" PESTICIDE OUTLOOK,December 1996 (1996-12), pages 29-32, XP000909474
- J. ROUCHAUD, O. NEUS, D. CALLENS & R. BULCKE: "Isofluxatol herbicide soil persistence and mobility in summer corn and winter wheat crops." BULL. ENVIRON. CONTAM. TOXICOL., vol. 60, 1998, pages 577-584, XP000909380

## Description

This invention relates to a method for controlling the growth of weeds by the progressive application to, or release into, the surface layer of a growing medium, of a benzoylisoxazole herbicide, and to compositions for use in the method.

### Background of the invention

The use of isoxazoles for controlling weeds has been described in European Patent Publication Nos. 0418I75,0487357,0527036 and 0560482, and in the International Publication No. WO 97/43270 which describes results retrieved with a dose range of 0.25 to 4.0 kg/ha of active ingredient.

Rouchaud et al. (Bulletin of Environmental Contamination and Toxicology, 1998, vol. 60 no. 4, pp. 577-584) describe the soil half life of isoxaflutole, an isoxazole herbicide, under different conditions after a single spray application and wherein isoxaflutole was formulated as a water dispersible granule which acts as a fast release formulation.

Luscombe & Pallett (Pesticide Outlook, December 1996, pages 29-32) describe the degradation of isoxaflutole in water and soil which comprises the formation of the metabolite diketonitrile (DICN).

The herbicidal activity of diketonitriles (DKN) which may be formed from the isoxazoles has also been described in European Patent Publication Nos. 0213892,0496630 and 0496631, and International Publication No. WO 95/25099.

Following the application of isoxazole herbicides they may decompose to diones, in particular diketonitrile (DKN) compounds. This conversion is generally irreversible. The DKN compounds are generally also herbicides. They are generally more water soluble than the isoxazole herbicides and may be subject to movement in the soil profile following rainfall.

It has been found that by modifying the way isoxazole herbicides are applied the ratio of isoxazole to DKN in a growing medium such as soil can be altered in favour of the isoxazole, increasing the ratio of isoxazole to DKN.

It has been found that by maintaining the ratio of isoxazole to DKN, in favour of the isoxazole, in the surface layer of the soil, for example, during the period from application of isoxazole to establishment of a crop, improved control of weeds may be obtained. Furthermore, crop selectivity may be improved and the risk of run off and leaching may be reduced.

An object of the present invention is to provide a method of application and/or composition which reduces the net movement of isoxazole and DKN through the soil and retains the compounds in the soil surrounding, preferably immediately surrounding, the point of application of the isoxazole.

Another object of the present invention is to provide a method and/or composition which permits the delivery of lower individual dose rates of isoxazole herbicides while maintaining (and sometimes improving) herbicidal efficacy.

A further object of the present invention is to provide a composition, comprising an isoxazole, with improved activity on weed species and/or improved crop selectivity.

The objects of the invention can be achieved in whole or in part by the present invention.

It is known that isoxazoles exert their herbicidal activity in plants by conversion to DKN compounds. It might be expected, therefore, that application of isoxazole in such a way as to accelerate or favour its conversion to DKN would be advantageous. The Applicants have found that the opposite is true.

The present invention provides a method for controlling the growth of weeds at a locus in a solid growing medium which comprises treating the locus with a composition comprising an isoxazole herbicide to provide progressive or sequential delivery or release of isoxazole herbicide into the surface layer of the medium;
wherein the isoxazole herbicide is selected from the compounds of general formula (I): 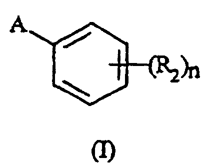 wherein:
A represents a group (A-1) or (A-2): 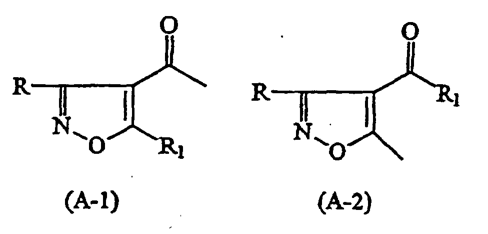
wherein:
R represents a hydrogen atom or a halogen atom; a straight- or branched-chain alkyl or alkenyl or alkynyl group containing up to six carbon atoms which is optionally substituted by one or more halogen atoms; a cyctoalkyl group containing from 3 to 6 carbon atoms optionally substituted by one or more groups R⁵, one or more halogen atoms or a group -CO₂R³; or a group selected from -CO₂R³, -COR⁵, cyano, nitro, -CONR³R⁴ and -S(O)ₖR¹³ ;
R¹ represents a straight- or branched-chain alkyl, alkenyl or alkynyl group containing up to six carbon atoms which is optionally substituted by one or more halogen atoms; or a cycloalkyl group containing from three to six carbon atoms optionally substituted by one or more groups R⁵ or one or more halogen atoms;
R² represents a halogen atom; a straight- or branched-chain alkyl alkenyl or alkynyl group containing up to six carbon atoms which is optionally substituted by one or more halogen atoms; a straight- or branched-chain alkyl group containing up to six carbon atoms which is substituted by one or more groups -OR⁵; or a group selected from nitro, cyano, -CO₂R⁵, -S(O)ₚR⁶, -O((CH₂)ₘOR⁵, -COR⁵, -NR¹¹R¹², -N(R⁸)SO₂R⁷, -N(R⁸)CO₂R⁷, -OR⁵, -OSO₂R⁷, -SO₂NR³R⁴, -CONR³R⁴, -CSNR³R⁴, -(CR⁹R¹⁰)ₜ-S(O)_{q}R⁷ and -SF₅; or two groups R², on adjacent carbon atoms of the phenyl ring may, together with the carbon atoms to which they are attached, form a 5 to 7 membered saturated or unsaturated heterocyclic ring containing up to three ring heteroatoms selected from nitrogen, oxygen and sulfur, which ring is optionally substituted by one or more groups selected from halogen, nitro, -S(O)ₚR¹³, C₁₋₄ alkyl, C₁₋₄ alkoxy, C₁₋₄ haloalkyl, C₁₋₄ haloatkoxy, =O (or a 5- or 6- membered cyclic acetal thereof), and =NO-R³, it being understood that a sulphur atom, where present in the ring, may be in the form of a group -SO- or -SO₂-;
n represents an integer from one to five: when n is greater than one the groups R² may be the same or different;
R³ and R⁴ each independently represent a hydrogen atom, or a straight- or branched chain alkyl group containing up to six carbon atoms which is optionally substituted by one or more halogen atoms;
R⁵ represents a straight- or branched-chain alkyl group containing up to six carbon atoms which is optionally substituted by one or more halogen atoms; or a straight- or branched-chain alkenyl or alkynyl group containing from two to six (preferably from three to six) carbon atoms which is optionally substituted by one or more halogen atoms;
R⁶ and R⁷, which may be the same or different, each represent R⁵ or phenyl optionally substituted by from one to five groups which may be the same or different selected from a halogen atom, a straight- or branched-chain alkyl group containing up to six carbon atoms which is optionally substituted by one or more halogen atoms, nitro, cyano, -(CO₂R⁵, -S(O)ₚR¹³, -NR¹¹NR¹², -OR⁵ and -CONR³R⁴_{;}
R⁸, R⁹ and R¹⁰ each represent a hydrogen atom or R⁶;
R¹¹ and R¹² each represent hydrogen or R⁵;
R¹³ represents a straight- or branched-chain alkyl group containing up to six carbon atoms which is optionally substituted by one or more halogen atoms;
k, p and q independently represent the values zero, one or two;
m represents one, two or three;
t represents an integer from one to four; when t is greater than one, the groups R⁹ and R¹⁰ may be the same or different;
or an agriculturally acceptable salt or metal complex thereof;
and wherein
the application rate of 4-benzoylisoxazole herbicides of formula (I) in compositions of the present invention is from 0.005 kg to 0.12 kg herbicidally active compound per hectare;
and when sequential doses of the isoxazole herbicide are used the application rates given above is divided by two or more.

In certain cases, the groups R to R¹³ may give rise to optical and/or stereoisomerism. All such forms are embraced by the present invention.

The growing medium includes composts but is preferably the soil.

The locus is preferably a crop-growing locus, for example, where a crop is sown and cultivated.

The surface layer is generally from the surface to a depth of 10 cm, preferably to a depth of 5 cm, more preferably to a depth of 3 cm.

According to a feature of the invention the method comprises applying to the locus, for example where a crop is sown and cultivated, sequential low doses of isoxazole herbicides. For example the normal dosage may be divided into two or more, for example 2 to 5, generally equal portions and applied at time-spaced intervals, each application after the first being made, for example 1 to 4 days, preferably 1 day, after the preceding one.

According to a further feature of the present invention the method comprises treating the locus with a delayed release composition comprising the isoxazole herbicide.

The delayed release composition, which constitutes a feature of the invention, may comprise, for example, an encapsulated composition comprising the isoxazole itself or a composition containing it. The delayed release compositions may be prepared by known methods.

The encapsulated product may have a solid outer wall, said wall comprising an inert material, generally having no substantial herbicidal activity.

The encapsulated isoxazole according to the present invention may comprise granules comprising an isoxazole derivative of formula (I), each of these granules being encapsulated with a solid film comprising an inert material itself having no substantial herbicidal activity.

Preferably the inert material is a water-soluble polymeric material, modified by treatment to render it substantially water insoluble.

Soluble materials which may used include:
a copolyester; polyvinylalcohol; polyacrylate; polycarboxylate; gelatine; polysulfonate, for example the polystyryl polysulfones, a protein, a polyethylene oxide; a modified or unmodified starch; a cellulose for example carboxymethyl cellulose; a dextran, maltose, an alkyl-, hydroxyalkyl-, carboxyalkyl-cellulose; a polyvinylether; poly(2,4-diethyl-6-triazolethylene); poly(vinylsulfonic acid), polyanhydride, a low molecular weight ureaformaldehyde resin, a low molecular weight melamine-formaldehyde resin, a polymethacrylate for example poly(alkylcyanoacrylate), poly(isobutylcyanoacrylate), poly(2-hydroxyethylmethacrylate), polyacrylic acid or a homologue thereof; low molar mass amphiphiles; low molar mass polymeric amphiphiles; polylactic acid glutamic acid; dendrimers (hyperbranched polymers); phospholipids for example distearoylphosphatidyl choline, dioleoylphosphatidylethanolamine, dipalmitoylphosphatidylcholine, dipalmitoylphosphatidylglycemi, phosphatidylethanolamine, phosphatidylinositol; lipoprotein, semi-solid poly(orthoester) polycarboxylates; hydrogels. The materials may be in the form of, for example, solid lipid nano/micro spheres; polyester microspheres, nanocapsules, niosomes, liposomes, polymeric micelles. An oil may be used to facilitate the production of an emulsion with small particle sizes and to inhibit agglomeration.

Preferably the water-soluble material is a copolyester, for example gerol which is a copolymer for example: 1,3-Benzenedicarboxylic acid, 5-sulfo-monosodium salt, polymer with 1,3-benzenedicarboxylic acid, 1,4-benzenedicarboxylic acid, 1,2-ethanediol, 2,2'-[1,2-ethaned.iylbis(oxy)]bis[ethanol] and 2,2'-oxybis[ethanol]. The water-soluble materials may vary in molecular weight and may include oligomers.

The inert water-soluble polymer is generally precipitated by association (by complexation or mixing) with a material which does not itself solubilise the aforementioned water-soluble polymer. The materials which result in precipitation of the polymer include soluble salts of alkaline earth metals (for example calcium). The association can be modulated by adjusting the pH of the water soluble solution of the polymer which solubilises the ions (of the aforementioned alkaline earth) which effect precipitation of the now insolublised polymer to encapsulate the particles of the active material. The pH can be adjusted using, for example, acetic acid. Precipitation can also be induced by adjusting the solvent or solvents without the need for association with another material.

The size of the granules of the active material of an isoxazole derivative of formula (I) is generally from 0.1 to 50 µm, preferably from 1 to 20 µm.

The thickness of the coating of the encapsulating material is generally from 0.1 to 50 µm, preferably from 1 to 20 µm.

The granules of encapsulated 4-benzoylisoxazole derivative of formula (1) according to the present invention may be for example, in a powdered state or in a liquid or solid formulation, contained within a support (or a carrier for application).

Compositions of the present invention improve the release of a herbicide to the soil site to which it is applied and movement resulting from rain water or irrigation is reduced. A marked improvement in the downward transmigration of the active ingredient from the immediate application area (weed seed zone) through the soil profile is provided.

Compositions of the present invention provide a method for controlling the release of a herbicide in a range of soil types and edaphic conditions by modification of the ratios of isoxazole: carrier material.

The use of compositions of the present invention permits more efficient use of herbicide which is retained in the area of soil application, for example the weed seed zone; thus the amount of herbicide applied may be reduced. In addition, the herbicide is maintained in the area of the weed seed zone for a longer period of time than usual.

Localisation of the herbicide in the weed seed zone improves selectivity on the crop species, for example, maize.

Compositions of the present invention provide a method for reducing the release rate of herbicides, such as isoxazoles, in soil thereby slowing the overall rate of degradation. Encapsulation in a matrix carrier increases the stability of the herbicides as it is protected from the components which may promote degradation, such as moisture or microbial activity.

By the term «pre-emergence application)) is meant an application to the soil in which the weed seeds or seedlings are present before emergence of the crop. One example of a pre-emergence application is known as «pre-glant incorporated)) (PPI), where the herbicide is incorporated into the soil before planting the crop. Another is where the herbicide is applied to the soil surface after sowing the crop. By the term «foliar activity» is meant herbicidal activity produced by application to the aerial or exposed portions of the weeds which have emerged above the surface of the soil.

In general, the application rate of 4-benzoylisoxazole herbicides of formula (I) in compositions of the present invention is from 0.005 kg to 0.12 kg herbicidally active compound, preferably from 0.02 kg to 0.12 kg herbicidally active compound, even more preferably from 0.05 to 0.09 kg herbicidally active compound per hectare. When sequential low doses of isoxazole herbicide are used, as hereinbefore described, the application rates given above may be divided.

The method of the invention is generally applied to a locus pre-emergence of the weeds and crop plant. Preferably the locus is first cultivated and/or treated to remove existing weeds. For example a burn down herbicide such as glyphosate may be used.

By the term "agriculturally acceptable salts" is meant salts the cations or anions of which are known and accepted in the art for the formation of salts for agricultural or horticultural use. Preferably the salts are water soluble. Suitable acid addition salts, formed by compounds of formula (I) containing an amino group, include salts with inorganic acids, for example, hydrochlorides, sulphates, phosphates and nitrates, and salts with organic acids, for example, acetic acid Suitable salts formed by compounds of formula (1) which are acidic, i.e. compounds containing one or more carboxy groups, with bases include alkali metal (eg. sodium and potassium) salts, alkaline earth metal (e.g. calcium and magnesium) salts, ammonium and amine (e.g. diethanolamine, triethanolamine, octylamine, dioctylmethylamine and morpholine) salts.

In the description unless otherwise specified 'halogen' means a fluorine, chlorine, bromine or iodine atom.

Compounds of formula (1) wherein A represents (A-1 ) are preferred.

The phenyl ring of the compounds of formula (I) is preferably 2,4-disubstituted, 2,3-disubstituted or 2,3,4-trisubstituted.

Compounds of formula (I) in which R represents hydrogen or -CO₂R³ wherein R³ represents or a straight- or branched chain alkyl group containing up to three carbon atoms; and R¹ represents cyclopropyl are preferred.

Compounds of formula (I) in which R² represents a halogen atom; a straight- or branched chain alkyl group containing up to three carbon atoms which is optionally substituted by one or more halogen atoms; -S(O)ₚR^{b}; -OR⁵ or -CH₂S(O)_{q}R⁷; wherein R⁵, R⁶ and R⁷ each represent the same or different optionally halogenated methyl or ethyl groups are preferred.

A preferred class of compounds of formula (I) wherein A represents (A-1) are those wherein:
R is hydrogen or -CO₂Et;
R¹ is cyclopropyl;
and two groups R², on adjacent carbon atoms of the phenyl ring may, together with the carbon atoms to which they are attached, combine to form a 5 or 6 membered saturated or unsaturated heterocyclic ring which is fused to the 2,3 or 3,4 positions of the benzoyl ring; wherein the heterocyclic ring contains two hetero atoms selected from sulphur and oxygen which are located at the 2 and 3, or 3 and 4 positions of the benzoyl ring; and in which the 4-substituent of the benzoyl ring is halogen or S(O)pMe, or the 2-substituent of the benzoyl ring is methyl, S(O)ₚMe or -CH₂S(O)_{q}Me respectively; and optionally the heterocyclic ring may be substituted by one or more halogen atoms.

A more preferred class of compounds of formula (I) are those wherein A represents (A-1); R is hydrogen or -CO₂Et; R¹ is cyclopropyl; R² is a halogen atom or a group selected from -CF₃, Me, Et, -S(O)ₚMe, -CH₂S(O)_{q}Me and optionally halogenated methoxy or ethoxy; and n is two or three.

A yet more preferred class of compounds of formula (I) are those having the formula (Ia): 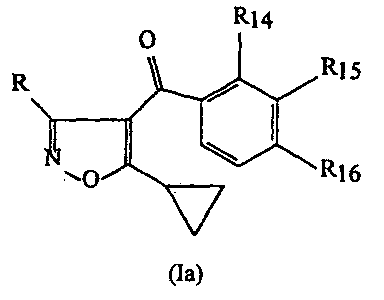 wherein:
R is hydrogen or -CO₂Et;
R¹⁴ is selected from -S(O)ₚMe, Me, Et, a chlorine, bromine or fluorine atom, methoxy, ethoxy and -CH₂S(O)_{q}Me;
R¹⁵ is selected from a hydrogen atom, a chlorine, bromine or fluorine atom, methoxy, ethoxy and -S(O)ₚMe; and
R¹⁶ is selected from a hydrogen atom, a chlorine, bromine or fluorine atom, methoxy and CF₃;
and wherein at least one of R¹⁵ and R¹⁶ is other than hydrogen.

An especially preferred class of compounds of formula (I) have the formula (Ib): 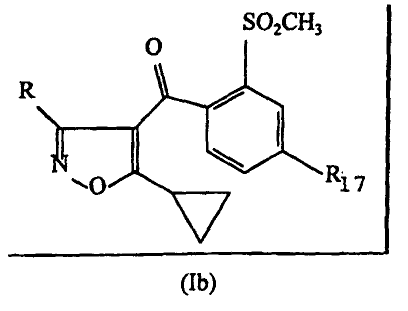 wherein R¹⁷ is chlorine, bromine or trifluoromethyl; and
R is hydrogen or -CO₂Et.

The following compounds of formula (I) are among the most preferred for use in the present invention:
5-cyclopropyl-4-[2-chloro-3-ethoxy-4-(ethylsulphonyl)benzoyl]isoxazole;
4-(4-chloro-2-methylsulphonylbenzoyl)-5-cyclopropylisoxazole;
5-cyclopropyl-4-(2-methylsulphonyl-4-trifluoromethylbenzoyl)isoxazole;
4-(4-bromo-2-methylsulphonylbenzoyl)-5-cyclopropylisoxazole;
5-cyclopropyl-4-[4-fluoro-3-methoxy-2-(methylsulphonyl)benzoyl]isoxazole;
4-(4-bromo-2-methylsulphonylmethylbenzoyl)-5-cyclopropylisoxazole;
ethyl 5-cyclopropyl-4-(2-methylsulphonyl-4-trifluoromethylbenzoyl)isoxazole-3-carboxylate;
5-cyclopropyl-4-(2-methylsulphonyl-4-trifluoromethylbenzoyl)-3-methylthioisoxazole.

The most preferred compound is 5-cyclopropyl-4-(2-methylsulphonyl-4-trifluoromethylbenzoyl)isoxazole (isoxaflutole).

The delayed release compositions as claimed by the present invention comprise the isoxazoles of formula (Ia) as defined hereabove.

Procedures for preparing isoxazoles of formula (I) are as described in European Patent Publication Nos. 0418175,0487357,0527036 and 0560482.

The method of the invention can be used on genetically modified crops.

By genetically modified crop is understood those crops which have been made tolerant towards herbicides by conventional sowing and cultivation methods or genetic engineering methods.

Compositions suitable for herbicidal use in the method of the invention comprising one or more of the 4-benzoylisoxazales of formula (I) or an agriculturally acceptable salt or metal complex thereof (which may be encapsulated as hereinbefore described), in association with, and preferably homogeneously dispersed in, one or more compatible agriculturally-acceptable diluents or carrier and/or surface active agents [i.e. diluents or carriers and/or surface active agents of the type generally accepted in the art as being suitable for use on herbicidal compositions and which are compatible with compounds of formula (I)]. The term «homogeneously dispersed» is used to include compositions in which the compounds of formula (1) are dissolved in other components. The term «herbicidal compositions» is used in a broad sense to include not only compositions which are ready for use as herbicides but also concentrates which must be diluted before use. Preferably, the compositions contain from 0.05 to 90% by weight of one or more compounds of formula (I).

The herbicidal compositions may contain both a diluent or carrier and surface-active (e.g. wetting, dispersing, or emulsifying) agent. Surface-active agents which may be present in herbicidal compositions of the present _ invention may be of the ionic or non-ionic types, for example sulphoricinoleates, quaternary ammonium derivatives, products based on condensates of ethythene oxide with alkyl and polyaryl phenols, e.g. nonyl- or octyl-phenols, tristyryl phenols, condensates of ethylene oxide with alcohols, or carboxylic acid esters of anyhydrosorbitols which have been rendered soluble by etherification of the free hydroxy groups by condensation with ethylene oxide, alkali and alkaline earth metal salts of sulphuric acid esters and sulphonic acids such as dinonyl- and dioctyl-sodium sulphonosuccinates and alkali and alkaline earth metal salts of high molecular weight sulphonic acid derivatives such as sodium and calcium lignosulphonates and sodium and calcium alkylbenzene sulphonates.

Suitably, the herbicidal compositions' as used in the method according to the present invention may comprise up to 10% by weight, e.g. from 0.05% to 10% by weight, of surface-active agent but, if desired, herbicidal compositions according to the present invention may comprise higher portions of surface-active agent, for example up to 15% by weight in liquid emulsifiable suspension concentrates and up to 25% by weight in liquid water soluble concentrates.

Examples of suitable solid diluents or carriers are aluminium silicate, microfine silicon dioxide, talc, chalk, calcined magnesia, kieselguhr, tricalcium phosphate, powdered cork, adsorbent carbon black and clays such as kaolin, attapulgite, diatomaceous earth, mica, alumina oxide, titanium oxide and bentonite. The solid compositions (which may take the form of dusts, granules or wettable powders) are preferably prepared by grinding the compounds of formula (I) with solid diluents or by impregnating the solid diluents or carriers with solutions of the compounds of formula (I) in volatile solvents, evaporating the solvents and if necessary, grinding the products so as to obtain powders. Granular formulations may be prepared by absorbing the compounds of formula (I) dissolved in suitable solvents, (which may, if desired, be volatile) onto the solid diluents or carriers in granular form and, if desired, evaporating the solvents, or by granulating compositions in powder form obtained as described above. Solid herbicidal compositions, particularly wettable powders and granules, may contain wetting or dispersing agents (for example of the types described above), which may also, when solid, serve as diluents or carriers.

Liquid compositions as used in the method according to the invention may take the form of aqueous, organic or aqueous-organic solutions, suspensions and emulsions which may incorporate a surface-active agent. Suitable liquid diluents for incorporation in the liquid compositions include water, glycols, glycol ethers, tetrahydrofurfuyl alcohol, acetophenone, cyclohexanone, isophorone, alkyl pyrrolidones, butylolactone, chlorinated toluene, xylene, mineral, animal and vegetable oils, esterified vegetable oils and light aromatic and naphthenic fractions of petroleum (and mixtures of these diluents). Surface-active agents, which may be present in the liquid compositions, may be ionic or non-ionic (for example of the types described above) and may, when liquid, also serve as diluents or carriers.

Powders, dispersible granules and liquid compositions in the form of concentrates may be diluted with water or other suitable diluents, for example mineral or vegetable oils, particularly in the case of liquid concentrates in which the diluent or carrier is an oil, to give compositions ready for use.

When desired, liquid compositions of the compounds of formula (I) may be used in the form of self-emulsifying concentrates containing the active substances dissolved in the emulsifying agents or in solvents containing emulsifying agents compatible with the active substances, the simple addition of such concentrates to water producing compositions ready for use.

Liquid concentrates in which the diluent or carrier is an oil may be used without further dilution using the electrostatic spray technique.

Herbicidal compositions as used in the method according to the present invention may also contain, if desired, conventional adjuvants such as adhesives, protective colloids, thickeners, penetrating agents, spreading agents, stabilisers, buffers, sequestering agents, anti-caking agents, colouring agents and corrosion inhibitors. These adjuvants may also serve as carriers or diluents.

Unless otherwise specified, the following percentages are by weight. Preferred herbicidal compositions according to the present invention are encapsulations containing water dispersible granules which comprise from 1 to 90%, e.g. 25 to 75% of one or more compounds of formula (I), from 1 to 15%, e.g. 2 to 10%, of surface-active agent and from 5 to 95%, e.g. 20 to 60%, of solid diluent, e.g. clay, granulated with the addition of water to form a paste and then dried;
aqueous suspension concentrates which comprise from 5 to 70% of one or more compounds of formula (1), from 2 to 10% of surface-active agent, from 0.1 to 5% of thickener and from 15 to 87.9% of water;
wettable powders which comprise from 5 to 90% of one or more compounds of formula (I), from 2 to 10% of surface-active agent and from 8 to 88% of solid diluent or carrier;
water soluble or water dispersible powders which comprise from 5 to 90% of one or more compounds of formula (I), from 2 to 40% of sodium carbonate and from 0 to 88% of solid diluent;
liquid water soluble concentrates which comprise from 5 to 50%, e.g. 10 to 30% of one or more compounds of formula (I), from 0 to 25%.of surface-active agent and from 10 to 90%, e.g. 45 to 85%, of water miscible solvent, e.g. triethylene glycol, or a mixture or water-miscible solvent and water;
liquid emulsifiable suspension concentrates which comprise from 5 to 70% of one or more compounds of formula (I), from 5 to 15% of surface-active agent, from 0.1 to 5% of thickener and from 10 to 84% of organic solvent, e.g. mineral oil; and
emulsifiable concentrates which comprise 0.05 to 90%, and preferably from 1 to 60% of,one or more compounds of formula (I), from 0.01 to 10%, and preferably from 39 to 98.99%, of organic solvent.

The water dispersible granules comprising isoxazoles of formula (I) whose apparent density was 0.25 - 0.75, have a particle size of generally 10-2000 µm, preferably 300-1500 µm.

Herbicidal compositions_{'} as used in the method according to the present invention may also comprise the compounds of formula (I) in association with, and preferably homogeneously dispersed in, one or more other pesticidally active compounds and, if desired, one or more compatible pesticidally diluents or carriers, surface-active agents and conventional adjuvants as hereinbefore described.

Examples of other pesticidally active compounds which may be included in, or used in conjunction with, the herbicidal compositions as used in the method of the present invention include herbicides, for example to increase the range of weed species controlled for example acetochlor,
alachlor [2-chloro-2,6'-diethyl-N-(methoxy-methyl)-acetanilide], atrazine [2-chloro-4-ethylamino-6-isoprpylarnino-1,3,5-triazine), bromoxynil [3,5-dibromo-4-hydroxybenzonitrile], chlortoluron [N'-(3-chloro-4-methylphenyl)-N,N-dimethylurea, cyanazine [2-chloro-4-(1-cyano-1-methylethylamino)-6-ethylamino-1,3,5-triazine], 2,4-D [2,4-dichlorophenoxy-acetic acid], dicamba [3,6-dichloro-2-methoxybenzoic acid], difenzoquat [1,2-diethyl-3,5-diphenyl-pyrazolium salts], dimethanamid, flampropmethyl [methyl N-2-(N-benzoyl-3-chloro-4-fluoroanilinorpropionate], flufenacet, fluometron [N'-(3-trifluoromethylphenyl)-N,N-dimethylurea, glyphosate, glufosinate, isoproturon [N'-(4-isopropylphenyl)-N,N-dimethylureaj, metolachlor, metribuzin, insecticides, e.g. synthetic pyrethroid, e.g. permethrin and cypermethrin, fipronil and fungicides, e.g. carbamates, e.g. methyl N-(1-butyl-carbamoylbenzimidazol-2-yl)carbamate, and triazoles e.g. 1-(4-chloro-phenoxy)-3,3-dimethyl-1-(1,2,4-triazol-1-yl)-butan-2-one.

Pesticidally active compounds and other biologically active materials which may be included in, or used in conjunction with, the herbicidal compositions as used in the method of the present invention, for example those hereinbefore mentioned, and which are acids, may, if desired, be utilised in the form of conventional derivatives, for example alkali metal and amino salts and esters.

The following Examples illustrate herbicidal compositions which may be used in the present invention. The Active Ingredient listed in the following examples refers to a compound of general formula (I).

### Example C1:

An emulsifiable concentrate is formed from:

| | |
|---|---|
| Active ingredient | 20% w/v |
| N-Methylpyrrolidinone (NMP) | 25% w/v |
| Calcium dodecylbenzenesulphonate (CaDDBS) | 4% w/v |
| Nonylphenol ethylene oxide propylene oxide Condensate (NPEOPO) | 4% w/v |
| Aromatic solvent | to 100 volumes |

by stirring NMP, active ingredient (Compound 1), CaDDBS, NPEOPO and Aromatic solvent until a clear solution is formed, and adjusting to volume with Aromatic solvent.

### Example C2

A wettable powder is formed from:

| | |
|---|---|
| Active Ingredient | 50% w/w |
| Sodium dodecylbenzenesulphonate | 3% w/w |
| Sodium methyl oleoyl taurate | 5% w/w |
| Sodium polycarboxylate | 1% w/w |
| Microfine silicon dioxide | 3% w/w |
| China clay | 38% w/w |

by blending the above ingredients together and grinding the mixture in an air jet mill.

### Example C3

A suspension concentrate is formed from:

| | |
|---|---|
| Active Ingredient | 50% w/v |
| Antifreeze (Propylene glycol) | 5% w/v |
| Ethoxylated tristyrylphenol phosphate | 0.5% w/v |
| Nonyl phenol 9 mole ethoxylate | 0.05% w/v |
| Sodium polycarboxylate | 0.02% w/v |
| Attaclay | 1.5% w/v |
| Antifoam | 0.003% w/v |
| Water | to 100 volumes |

by stirring the above ingredients together and milling in a bead mill.

### Example C4

A water dispersible granule is formed from:

| | |
|---|---|
| Active Ingredient | 50% w/w |
| Sodium dodecylbenzenesulphonate | 3% w/w |
| Sodium methyl oleoyl taurate | 5% w/w |
| Sodium polycarboxylate | 1% w/w |
| Binder (Sodium lignosulphonate) | 8% w/w |
| china clay | 30% w/w |
| Microfine silicon dioxide | 3% w/w |

by blending the above ingredients together, grinding the mixture in an air jet mill and granulating by addition of water in a suitable granulation plant (e.g. Fluid bed drier) and drying. Optionally the active ingredient may be ground either on its own or admixed with some or all of the other ingredients.

The following non-limiting Example illustrates the invention.

### EXAMPLE 1

Glasshouse experiment showing unexpected enhancement of biological activity of weeds following application of compound (isoxaflutole).

7 x 7 cm² pots were filled with a non-sterile loam soil. Weed seeds (Amaranthus retroflexus, Echinochloa crus galli and Setaria viridis) were placed in three separate shallow wells with a maize seed (Pioneer 3394) inserted to a depth of 4 cm in between in each pot and the seeds lightly covered with soil.

A 1 ml solution of technical isoxaflutole, suitably diluted to give a dose equivalent to 6.25, 12.5, 25, 50 and 100 g/ha in acetonitrile, was pipetted-evenly on the soil surface of pots (replicated 10 times), according to the following regime.

On day 1, a set of 5 pots were treated with 5 dose rates (6.25 -100 g/ha) and set aside in the glasshouse. At the same time, on day I a second set of 4 pots were treated with 4 dose rates (treatment A: 6.25-50 g/ha) along with a third set of 3 pots treated with 3 dose rates (treatment B: 6.25-25 g/ha). On day 2 each of the second and third pots were treated again the pots receiving identical treatments A and B and second set of pots set aside in the glasshouse. On day 3 each of the third set of pots were treated again, the pots receiving identical treatment B. On day 4 each of the third set of pots were treated, the pots receiving identical treatment B and the pots set aside in the glasshouse.

The pots were maintained in a glasshouse, with overhead watering (3 x daily) and supplementary lighting. Visual assessment of % reduction, compared to untreated control plants was recorded 14 days after treatment. The results (average of 10 replicates) are shown on Table 1, where the dosing regime refers to the number of daily applications followed by the dose of compound on each day.

**TABLE 1**

| **% Damage 14 DAT: Comparison of Single vs. Multiple Application** | | | | |
|---|---|---|---|---|
| % Damage | | | | |
| Dosing Regime | Amare | Echcg | Setvi | Maize (P 3394) |
| 2 x 6.25 | 34 | 18 | 18 | 0 |
| 1 x 12.5 | 0 | 0 | 0 | 0 |
| 4 x 6.25 | 80 | 97 | 75 | 0 |
| 2 x 12.5 | 46 | 68 | 42 | 0 |
| 1 x 25 | 8 | 32 | 10 | 0 |
| 4 x 12.5 | 79 | 100 | 91 | 6 |
| 2 x 25 | 42 | 70 | 44 | 0 |
| 1 x 50 | 50 | 84 | 24 | 2 |
| 4 x 25 | 90 | 100 | 77 | 6 |
| 2 x 50 | 78 | 96 | 66 | 10 |
| 1 x 100 | 79 | 94 | 59 | 8 |

As can be seen in Table 1, the efficacy of the herbicide on key weed species is improved by 2 applications separated by 1 day and surprisingly even more enhanced by 4 applications separated by 3 days, compared to a single application of the same total dose of compound. Repeat applications did not appear to have any impact on maize phytotoxicity.

### EXAMPLE 2

A 30% aqueous solution of Gerol was prepared and 67 g added to 80 g of a suspension of isoxaflutole (250 g/L) in water containing a dispersant (sodium polynapthalene sulphate to maintain the suspension) with stirring. Powdered calcium carbonate (1g) was added and the resultant mixture sonicated with ultrasound before addition of polysiloxane oil (600 ml) to give an emulsion. Acetic acid (3 ml) was added and stirring continued for 2 hours. The stirring was stopped and the upper layer decanted from the precipitate. This solid was filtered off, washed with water and dried to give microparticles of encapsulated isoxaflutole. The encapsulated material may be formulated using methods hereinbefore described.

Gerol: Diethyleneglycol-ethyleneglycol-isophthalic acid-sodium 5-sulfoisophthalate-terephthalic acid-triethylene glycol copolymer.

### EXAMPLE 3

Maize is sown and then grown up in area where weeds and weed seeds are present. The weeds are a selection from: Alopecurus myosuroides, Avena fatua, Digitaria sanguinalis Echinochloa crus-ealli. Eleusine indica Lolium multiflorum. Setaria viridis. Sorghum halepense. Cyperus esculentus. Cvnerus iria Cyperus rotundus. Eleocharis acicularis. Abutilon theophrasti. Amaranthus retroflexus, Bidens pilosa, Chenopodium album, Galium aparine, Ipomoea purpurea, Lamium purpureum, Matricaria inodora, Sesbania exalta, Sinapis arvensis, Solanum nigrum, Stellaria media, Veronica hederifolia, Veronica Persia, Viola arvensis and Xanthium strumarium,

After one week sowing the maize, isoxazole is sprayed as an encapsulated formulation as.hereinbefore described at a rate of 105 g/ha of herbicidally active compound, the weight ratio of isoxazole: copolyester being 1:10. The amounts of isoxazole of formula (1) and DKN were measured after 4 days in a 5 cm deep soil core around the seed or seedling. The weight ratio of isoxazole: DKN was found to be 1.

The activity of the isoxazole on the crop and weeds was observed after 3 weeks, and found to be equal to 2% and 95% respectively.

A similar application in similar soil conditions without the copolyester provided a weight ratio of isoxazole: DKN of 0.1 and herbicidal activity on both crop and weeds was 15% and 95% respectively.

### EXAMPLE 4

Maize is sown in an area where weeds and weed seeds of the species Setaria viridis are present. Isoxazole is sprayed on the soil surface as an encapsulated formulation at a rate of 105 g herbicidally active compound per hectare. The activity of the isoxazole on maize and Setaria viridis was observed 6, 11, 14 and 17 days after treatment (DAT).

| **Activity of 4-benzoylisoxazole on Setaria viridis** | | | | | |
|---|---|---|---|---|---|
| Application rate g/ha | Formulation | DAT | | | |
| | | 6 | 11 | 14 | 17 |
| 105 | Encapsulated | 0 | 40 | 70 | 90 |
| | WG | 10 | 50 | 75 | 100 |

| **Activity of 4-benzoylisoxazole on Maize** | | | | | |
|---|---|---|---|---|---|
| Application rate g/ha | Formulation | DAT | | | |
| | | 6 | 11 | 14 | 17 |
| 105 | Encapsulated | 0 | 0 | 3 | 8 |
| | WG | 0 | 5 | 7 | 10 |

Activity on Setaria viridis by the encapsulated formulation was equal to that of the WG formulation. The encapsulated formulation decreased phytotoxicity on maize by 20-30% compared to the WG formulation.

### EXAMPLE 5

Maize is sown and grown up in an area where weeds and weed seedlings are present. The weeds are Amaranthus retroflexus, Echinochloa crus-galli and Setaria viridis. Solutions of isoxazole in acetonitrile were applied directly to the soil surface at dose rates of 100, 50 and 25 g/ha to plots A, B and C respectively. 1 DAT dose rates of 50 and 25 g/ha were applied to plots B and C respectively, 2 and 3 DAT a dose rate of 25 g/ha was applied to plot C.

| Activity of the isoxazole on maize and weed species was observed 14 DAT. | | | | |
|---|---|---|---|---|
| Dosing regime | AMARE | ECHCG | SETVI | Maize |
| 4 x 25 g/ha | 90 | 100 | 77 | 6 |
| 2 x 50 g/ha | 78 | 96 | 66 | 10 |
| 1 x 100 g/ha | 79 | 94 | 59 | 8 |

Maintaining the isoxazole in the surface of the soil within the area containing weed seeds and seedlings, by sequential application of low dose rates of isoxazole, provides improved activity on weeds.

## Claims

1. A method for controlling the growth of weeds at a locus in a solid growing medium which comprises treating the locus with a composition comprising an isoxazole herbicide to provide progressive or sequential delivery or release of isoxazole herbicide into the surface layer of the medium; wherein the isoxazole herbicide is selected from the compounds of general formula (I): 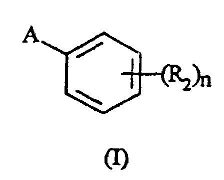 wherein:
A represents a group (A-1) or (A-2): 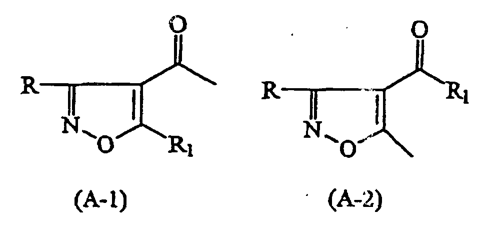
wherein:
R represents a hydrogen atom or a halogen atom; a straight- or branched-chain alkyl or alkenyl or alkynyl group containing up to six carbon atoms which is optionally substituted by one or more halogen atoms; a cycloalkyl group containing from 3 to 6 carbon atoms optionally substituted by one or more groups R⁵, one or more halogen atoms or a group -CO₂R³; or a group selected from -CO₂R³, -COR⁵, cyano, nitro, -CONR³R⁴ and -S(O)ₖR¹³;
R¹ represents a straight- or branched-chain alkyl, alkenyl or alkynyl group containing up to six carbon atoms which is optionally substituted by one or more halogen atoms; or a cycloalkyl group containing from three to six carbon atoms optionally substituted by one or more groups R⁵ or one or more halogen atoms;
R² represents a halogen atom; a straight- or branched-chain alkyl, alkenyl or alkynyl group containing up to six carbon atoms which is optionally substituted by one or more halogen atoms; a straight- or branched-chain alkyl group containing up to six carbon atoms which is substituted by one or more groups -OR⁵; or a group selected from nitro, cyano, -CO₂-R⁵, -S(O)ₚR⁶, -O(CH₂)ₘOR⁵, -COR⁵, -NR¹¹R¹², -N(R⁸)SO₂R⁷, -N(R⁸)CO₂R⁷, -OR⁵, -OSO₂R⁷, -SO₂NR³R⁴, -CONR³R⁴, -CSNR³R⁴, -(CR⁹R¹⁰)ₜ-S(O)_{q}R⁷ and -SF₅; or two groups R², on adjacent carbon atoms of the phenyl ring may, together with the carbon atoms to which they are attached, form a 5 to 7 membered saturated or unsaturated heterocyclic ring containing up to three ring heteroatoms selected from nitrogen, oxygen and sulfur. which ring is optionally substituted by one or more groups selected from halogen, nitro, -S(O)ₚR¹³, C₁₋₄ alkyl, C₁₋₄ alkoxy, C₁₋₄ haloalkyl, C₁₋₄ haloalkoxy, =O (or a 5- or 6- membered cyclic acetal thereof), and =NO-R³, it being understood that a sulphur atom, where present in the ring, may be in the form of a group -SO- or -SO₂-;
n represents an integer from one to five: when n is greater than one the groups R² may be the same or different;
R³ and R⁴ each independently represent a hydrogen atom, or a straight- or branched chain alkyl group containing up to six carbon atoms which is optionally substituted by one or more halogen atoms;
R⁵ represents a straight- or branched-chain alkyl group containing up to six carbon atoms which is optionally substituted by one or more halogen atoms; or a straight- or branched-chain alkenyl or alkynyl group containing from two to six (preferably from three to six) carbon atoms which is optionally substituted by one or more halogen atoms;
R⁶ and R⁷, which may be the same or different, each represent R⁵ or phenyl optionally substituted by from one to five groups which may be the same or different selected from a halogen atom, a straight- or branched-chain alkyl group containing up to. six carbon atoms which is optionally substituted by one or more halogen atoms, nitro, cyano, -CO₂R⁵, -S(O)ₚR¹³, -NR¹¹NR¹², -OR⁵ and -CONR³R⁴;
R⁸, R⁹ and R¹⁰ each represent a hydrogen atom or R⁶;
R¹¹ and R¹² each represent hydrogen or R⁵;
R¹³ represents a straight- or branched-chain alkyl group containing up to six carbon atoms which is optionally substituted by one or more halogen atoms;
k, p and q independently represent the values zero, one or two;
m represents one, two or three;
t represents an integer from one to four; when t is greater than one, the groups R⁹ and R¹⁰ may be the same or different;
or an agriculturally acceptable salt or metal complex thereof;
and wherein
the application rate of 4-benzoylisoxazole herbicides of formula (I) in compositions of the present invention is from 0.005 kg to 0.12 kg herbicidally active compound per hectare;
and when sequential doses of the isoxazole herbicide are used the application rates given above is divided by two or more.

2. A method according to claim 1 in which the growing medium is soil.

3. A method according to claim 1 or 2 in which the locus is a crop-growing locus.

4. A method according to claim 1, 2 or 3 in which the surface layer of the medium is from the surface to a depth of 10 cm.

5. A method according to any one of the preceding claims which comprises applying to the locus sequential low doses of isoxazole herbicide.

6. A method according to any one of claims 1 to 4 which comprises treating the locus with a delayed release composition comprising the isoxazole herbicide.

7. A method according to claim 6 in which the delayed release composition comprises an encapsulated composition.

8. A method according to claim 6 or 7 in which an encapsulated isoxazole is used, comprising an isoxazole herbicide according to claim 1 encapsulated with a solid film comprising an inert material itself having no substantial herbicidal activity.

9. A method according to claim 8 in which granules of an isoxazole herbicide according to claim 1 from 0.1 to 50 µm in size are used.

10. A delayed release composition comprising an isoxazole herbicide having the formula (Ia): 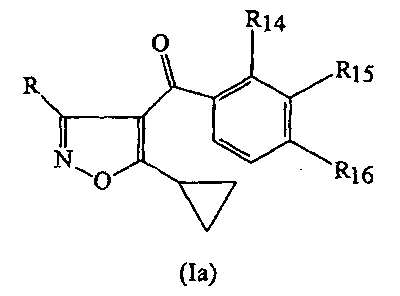 wherein:
R is hydrogen or -CO₂Et;
R¹⁴ is selected from -S(O)ₚMe, Me, Et, a chlorine, bromine or fluorine atom, methoxy, ethoxy and -CH₂S(O)_{q}Me;
R¹⁵ is selected from a hydrogen atom, a chlorine, bromine or fluorine atom, methoxy, ethoxy and -S(O)ₚMe; and
R¹⁶ is selected from a hydrogen atom, a chlorine, bromine or fluorine atom, methoxy and CF₃;
and wherein at least one of R¹⁵ and R¹⁶ is other than hydrogen.

## Patentansprüche

1. Verfahren zur Bekämpfung des Wachstums von Unkräutern an einem Ort in einem festen Wuchsmedium, das ein Behandeln des Ortes mit einer ein Isoxazolherbizid enthaltenden Zusammensetzung umfaßt, um eine progressive oder sequentielle Abgabe oder Freisetzung des Isoxazolherbizids in die Oberflächenschicht des Mediums zu ergeben; worin das Isoxazolherbizid unter den Verbindungen mit der allgemeinen Formel (I): 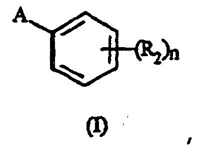 worin: .
A für eine Gruppe (A-1) oder (A-2) steht: 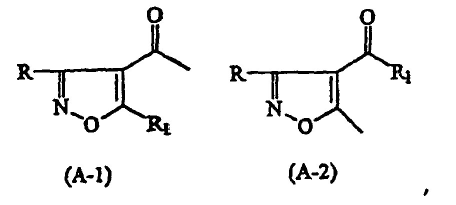
worin:
R ein Wasserstoffatom oder ein Halogenatom; eine geradkettige oder verzweigtkettige Alkyl- oder Alkenyl- oder Alkinylgruppe mit einem Gehalt an bis zu 6 Kohlenstoffatomen, die gegebenenfalls durch ein oder mehrere Halogenatome substituiert ist; eine Cycloalkylgruppe mit 3 bis 6 Kohlenstoffatomen, die gegebenenfalls durch eine oder mehrere Gruppen R⁵, ein oder mehrere Halogenatome oder durch eine Gruppe -CO₂R³ substituiert ist; oder eine unter -CO₂R³, -COR⁵, Cyano, Nitro, -CONR³R⁴ und -S(O)ₖR¹³ ausgewählte Gruppe darstellt;
R¹ eine geradkettige oder verzweigtkettige Alkyl-, Alkenyl- oder Alkinylgruppe mit bis zu 6 Kohlenstoffatomen, die gegebenenfalls durch ein oder mehrere Halogenatome substituiert ist; oder eine Cycloalkylgruppe mit 3 bis 6 Kohlenstoffatomen, die gegebenenfalls durch eine oder mehrere Gruppen R⁵ oder durch ein oder mehrere Halogenatome substituiert ist, darstellt;
R² ein Halogenatom; eine geradkettige oder verzweigtkettige Alkyl-, Alkenyl- oder Alkinylgruppe mit bis zu 6 Kohlenstoffatomen, die gegebenenfalls durch ein oder mehrere Halogenatome substituiert ist; eine geradkettige oder verzweigtkettige Alkylgruppe mit bis zu 6 Kohlenstoffatomen, die durch eine oder mehrere Gruppen -OR⁵ substituiert ist; oder eine unter Nitro, Cyano, -CO₂R⁵, -S(O)ₚR⁶, -O(CH₂)ₘOR⁵, -COR⁵, -N¹¹R¹², -N(R⁸)SO₂R⁷, -N(R⁸)CO₂R⁷, -OR⁵, -OSO₂R⁷, -SO₂NR³R⁴, -CONR³R⁴, -CSNR³R⁴, -(CR⁹R¹⁰)ₜ-S(O)_{q}R⁷ und -SF⁵ ausgewählte Gruppe darstellt; oder zwei Gruppen R² an benachbarten Kohlenstoffatomen des Phenylringes zusammen mit den Kohlenstoffatomen, an die sie gebunden sind, einen 5- bis 7-gliedrigen gesättigten oder ungesättigten heterocyclischen Ring mit einem Gehalt an bis zu drei, unter Stickstoff, Sauerstoff und Schwefel ausgewählten Ringheteroatomen bilden können, welcher Ring gegebenenfalls durch eine oder mehrere, unter Halogen, Nitro, -S(O)ₚR¹³, C₁-C₄-Alkyl, C₁-C₄-Alkoxy, C₁-C₄-Halogenalkyl, C₁-C₄-Halogenalkoxy, =O (oder ein 5- oder 6-gliedriges cyclisches Acetal davon) und =NO-R³ ausgewählte Gruppen substituiert ist, wobei ein Schwefelatom, soferne es im Ring vorliegt, in der Form einer Gruppe-SO- oder -SO₂- sein kann;
n eine ganze Zahl von 1 bis 5 bedeutet: falls n größer als 1 ist, können die Gruppen R² gleich oder verschieden sein; R³ und R⁴ jeweils unabhängig voneinander ein Wasserstoffatom oder eine geradkettige oder verzweigtkettige Alkylgruppe mit bis zu 6 Kohlenstoffatomen darstellen, die gegebenenfalls durch ein oder mehrere Halogenatome substituiert ist;
R⁵ eine geradkettige oder verzweigtkettige Alkylgruppe mit bis zu 6 Kohlenstoffatomen, die gegebenenfalls durch ein oder mehrere Halogenatome substituiert ist; oder eine geradkettige oder verzweigtkettige Alkenyl- oder Alkinylgruppe darstellt, die 2 bis 6 (vorzugsweise 3 bis 6) Kohlenstoffatome enthält und die gegebenenfalls durch ein oder mehrere Halogenatome substituiert ist;
R⁶ und R⁷, die gleich oder verschieden sein können, jeweils für R⁵ oder Phenyl stehen, das gegebenenfalls durch eine bis fünf Gruppen substituiert ist, die gleich oder verschieden sein können und unter einem Halogenatom, einer geradkettigen oder verzweigtkettigen Alkylgruppe mit bis zu 6 Kohlenstoffatomen, die gegebenenfalls durch ein oder mehrere Halogenatome, Nitro, Cyano. -CO₂R⁵, -S(O)ₚR¹³, -NR¹¹NR¹², -OR⁵ und -CONR³R⁴ substituiert ist, ausgewählt sind;
R⁸, R⁹ und R¹⁰ jeweils ein Wasserstoffatom oder R⁶ darstellen;
R¹¹ und R¹² jeweils Wasserstoff oder R⁵ bedeuten;
R¹³ eine geradkettige oder verzweigtkettige Alkylgruppe mit bis zu 6 Kohlenstoffatomen darstellt, die gegebenenfalls durch ein oder mehrere Halogenatome substituiert ist;
k, p und q unabhängig voneinander den Wert null, eins oder zwei aufweisen;
m den Wert eins, zwei oder drei aufweist;
t eine ganze Zahl von 1 bis 4 bedeutet; falls t größer als 1 ist, können die Gruppen R⁹ und R¹⁰ gleich oder verschieden sein;
oder einem landwirtschaftlich annehmbaren Salz oder Metallkomplex davon ausgewählt ist;
und worin die Aufwandsmenge von 4-Benzoylisoxazolherbiziden der Formel (I) in Zusammensetzungen der vorliegenden Erfindung von 0,005 kg bis 0,12 kg herbizid wirksamer Verbindung pro Hektar beträgt;
und worin, bei Anwendung sequentieller Dosen des Isoxazolherbizids, die oben angeführte Aufwandsmenge durch zwei oder mehr dividiert wird.

2. Verfahren nach Anspruch 1, worin das Wuchsmedium Erde ist.

3. Verfahren nach Anspruch 1 oder 2, worin der Ort ein Nutzpflanzen hervorbringender Ort ist.

4. Verfahren nach Anspruch 1, 2 oder 3, worin die Oberflächenschicht des Mediums von der Oberfläche bis zu einer Tiefe von 10 cm reicht.

5. Verfahren nach einem der vorstehenden Ansprüche, das ein sequentielles Aufbringen von niedrigen Dosen von Isoxazolherbizid auf den Ort umfaßt.

6. Verfahren nach einem der Ansprüche 1 bis 4, das ein Behandeln des Ortes mit einer das Isoxazolherbizid umfassenden Zusammensetzung mit verzögerter Freisetzung umfaßt.

7. Verfahren nach Anspruch 6, worin die Zusammensetzung mit verzögerter Freisetzung eine eingekapselte Zusammensetzung umfaßt.

8. Verfahren nach Anspruch 6 oder 7, worin ein eingekapseltes _{I}soxazol verwendet wird, umfassend ein Isoxazolherbizid gemäß Anspruch 1, das mit einem festen Film eingekapselt ist, umfassend ein inertes Material, das selbst keine substantielle herbizide Aktivität aufweist.

9. Verfahren nach Anspruch 8, worin Körnchen eines Isoxazolherbizids gemäß Anspruch 1 mit einer Größe von 0,1 bis 50 µm verwendet werden.

10. Zusammensetzung mit verzögerter Freisetzung, umfassend ein Isoxazolherbizid mit der Formel (Ia): 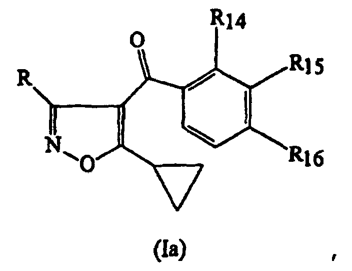 worin:
R für Wasserstoff oder -CO₂Et steht;
R¹⁴ unter -S(O)ₚMe, Me, Et, einem Chlor-, Brom- oder Fluoratom, Methoxy, Ethoxy und -CH₂S(O)_{q}Me ausgewählt ist;
R¹⁵ unter einem Wasserstoffatom, einem Chlor-, Brom- oder Fluoratom, Methoxy, Ethoxy und -S(O)ₚMe ausgewählt ist; und
R¹⁶ unter einem Wasserstoffatom, einem Chlor-, Brom- oder Fluoratom, Methoxy und CF₃ ausgewählt ist;
und worin wenigstens einer der Reste R¹⁵ und R¹⁶ eine von Wasserstoff verschiedene Bedeutung aufweist.

## Revendications

1. Procédé pour le contrôle de la croissance de mauvaises herbes sur un site dans un milieu de croissance solide qui comprend le traitement du site par une composition comprenant un herbicide de la famille de l'isoxazole en vue d'assurer la délivrance ou la libération progressives ou successives de l'herbicide de la famille de l'isoxazole dans la couche superficielle du milieu ; l'herbicide de la famille de l'isoxazole étant pris dans le groupe des composés de formule générale (I) 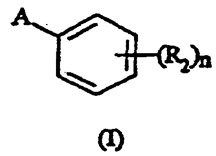 où
A représente un groupe (A-1) ou (A-2): 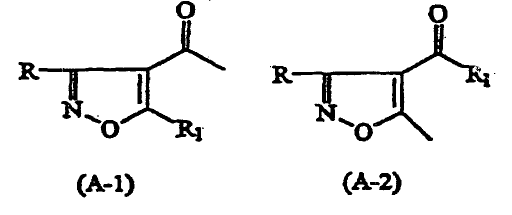
où
R représente un atome d'hydrogène ou un atome d'halogène ; un groupe alkyle ou alcényle ou alcynyle linéaire ou ramifié présentant jusqu'à 6 atomes de carbone qui est éventuellement substitué par un ou plusieurs atomes d'halogène ; un groupe cycloalkyle présentant de 3 à 6 atomes de carbone éventuellement substitué par un ou plusieurs groupes R⁵, un ou plusieurs atomes d'halogène ou un groupe -CO₂R³ ; ou un groupe pris parmi -CO₂R³, -COR⁵, cyano, nitro, -CONR³R⁹ et -S(O)ₖR¹³ ;
R¹ représente un groupe alkyle, alcényle ou alcynyle linéaire ou ramifié présentant jusqu'à 6 atomes de carbone qui est éventuellement substitué par un ou plusieurs atomes d'halogène ; ou un groupe cycloalkyle présentant de 3 à 6 atomes de carbone éventuellement substitué par un ou plusieurs groupes R⁵ ou un ou plusieurs atomes d'halogène ;
R² représente un atome d'halogène ; un groupe alkyle, alcényle ou alcynyle linéaire ou ramifié présentant jusqu'à 6 atomes de carbone qui est éventuellement substitué par un ou plusieurs atomes d'halogène ; un groupe alkyle linéaire ou ramifié présentant jusqu'à 6 atomes de carbone qui est substitué par un ou plusieurs groupes -OR⁵ ; ou un groupe pris parmi les groupes nitro, cyano, -CO₂R⁵, -S(O)ₚR⁶, -O(CH₂)ₘOR⁵, -COR⁵, -NR¹¹R¹², -N(R⁸)SO₂R⁷, -N(R⁸)CO₂R⁷, -OR⁵, -OSO₂R⁷, -SO₂NR³R⁴, -CONR³R⁴, -CSNR³R⁴, -(CR⁹R¹⁰)ₜ-S(O)_{q}R⁷ et -SF⁵ ; ou deux groupes R², sur des atomes de carbone adjacents du cycle phényle peuvent former, conjointement avec les atomes de carbone auxquels ils sont liés, un cycle hétérocyclique de 5 à 7 chaînons saturé ou insaturé, contenant jusqu'à 3 hétéroatomes cycliques pris parmi les atomes d'azote, d'oxygène et de soufre, lequel cycle est éventuellement substitué par un ou plusieurs groupes pris dans un groupe comprenant halogène, nitro, -S(O)ₚR¹³, alkyle en C₁₋₄, alkoxy en C₁₋₄, haloalkyle en C₁₋₄, haloalkoxy en C₁₋₄, =O (ou un de leurs acétals cycliques de 5 ou 6 chaînons), et =NO-R³, étant entendu qu'un atome de soufre, s'il est présent dans le cycle, peut se présenter sous forme d'un groupe -SO- ou -SO₂- ;
n est un entier de 1 à 5 ; quand n est supérieur à 1, les groupes R² peuvent être identiques ou différents ;
R³ et R⁴ indépendamment l'un de l'autre représentent chacun un atome d'hydrogène, ou un groupe alkyle linéaire ou ramifié présentant jusqu'à 6 atomes de carbone qui est éventuellement substitué par un ou plusieurs atomes d'halogène ;
R⁵ représente un groupe alkyle linéaire ou ramifié présentant jusqu'à 6 atomes de carbone qui est éventuellement substitué par un ou plusieurs atomes d'halogène : ou un groupe alcényle ou alcynyle linéaire ou ramifié présentant de 2 à 6 (de préférence de 3 à 6) atomes de carbone, qui est éventuellement substitué par un ou plusieurs atomes d'halogène ;
R⁶ et R⁷ qui peuvent être identiques ou différents, représentent chacun R⁵ ou un groupe phényle éventuellement substitué par 1 à 5 groupes qui peuvent être identiques ou différents pris dans le groupe comprenant un atome d'halogène, un groupe alkyle linéaire ou ramifié présentant jusqu'à 6 atomes de carbone qui est éventuellement substitué par un ou plusieurs atomes d'halogène, nitro, cyano, -CO₂R⁵, -S(O)ₚR¹³, -NR¹¹NR¹², -OR⁵ et -CONR³R⁴ ;
R⁸, R⁹ et R¹⁰ représentent chacun un atome d'hydrogène ou R⁶ ;
R¹¹ et R¹² représentent chacun un atome d'hydrogène ou R⁵ ;
R¹³ représente un groupe alkyle linéaire ou ramifié présentant jusqu'à 6 atomes de carbone qui est éventuellement substitué par un ou plusieurs atomes d'halogène ;
k, p et q indépendamment valent 0, 1 ou 2 ;
m vaut 1, 2 ou 3 ;
t est un entier de 1 à 4 ; quand t est supérieur à 1, les groupes R⁹ et R¹⁰ peuvent être identiques ou différents ;
où un sel ou complexe métallique acceptables en agriculture ; et où
la concentration d'emploi des herbicides de la famille du 4-benzoylisoxazole de formule (I) dans les compositions de la présente invention va de 0,005 kg à 0,12 kg de composé à activité herbicide à l'hectare ;
et quand on utilise des doses successives de l'herbicide de la famille de l'isoxazole, les concentrations d'emploi données ci-dessus sont divisées par deux ou plus.

2. Procédé selon la revendication 1, dans lequel le milieu de croissance est le sol.

3. Procédé selon la revendication 1 ou 2 dans lequel le site est le site de croissance de cultures.

4. Procédé selon les revendications 1, 2 ou 3 dans lequel la couche superficielle du milieu est la surface d'une profondeur de 10 cm.

5. Procédé selon l'une quelconque des revendications précédentes qui comprend l'application successive au site de faibles doses d'herbicide de la famille de l'isoxazole.

6. Procédé selon l'une quelconque des revendications 1 à 4 comprenant le traitement du site par une composition à libération retardée comprenant l'herbicide de la famille de l'isoxazole.

7. Procédé selon la revendication 6, dans lequel la composition à libération retardée comprend une composition encapsulée.

8. Procédé selon les revendications 6 ou 7 dans lequel on utilise un isoxazole encapsulé, comprenant un herbicide de la famille de l'isoxazole selon la revendication 1 encapsulé dans un film solide comprenant une matière inerte n'ayant pas elle-même d'activité herbicide essentielle.

9. Procédé selon la revendication 8, dans lequel on utilise des granules d'un herbicide de la famille de l'isoxazole selon la revendication 1 d'une taille de 0,1 à 50 µm.

10. Composition à libération retardée comprenant un herbicide de la famille de l'isoxazole répondant à la formule (Ia) : 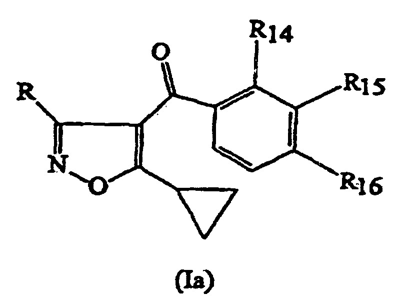
R représente un atome d'hydrogène ou un groupe -CO₂Et ;
R¹⁴ est pris parmi -S(O)ₚMe, Me, Et, un atome de chlore, de brome ou de fluor, un groupe méthoxy, éthoxy et -CH₂S(O)_{q}Me ;
R¹⁵ est pris parmi un atome d'hydrogène, un atome de chlore, de brome ou de fluor, un groupe méthoxy, éthoxy et -S(O)ₚMe : et
R¹⁶ est pris parmi un atome d'hydrogène, un atome de chlore, de brome ou de fluor, un groupe méthoxy, éthoxy et CF₃ ;
et où au moins un des R¹⁵ et R¹⁶ est différent de l'hydrogène.
